# EUROPÄISCHE PATENTSCHRIFT

(11) **EP 2 622 328 B1**
(45) Veröffentlichungstag und Bekanntmachung des Hinweises auf die Patenterteilung: **07.08.2019**
(21) Anmeldenummer: 11772908.7
(22) Anmeldetag: 27.09.2011
(51) Int. Cl.: G01N 21/88, G01N 21/958

(54) **VERFAHREN UND VORRICHTUNG ZUR ANZEIGE VON AUTOMATISIERT ERMITTELTEN FEHLERSTELLEN**
METHOD AND DEVICE FOR INDICATING AUTOMATICALLY IDENTIFIED FLAWS
PROCÉDÉ ET DISPOSITIF D'INDICATION D'EMPLACEMENTS DÉFECTUEUX DÉTERMINÉS AUTOMATIQUEMENT

(30) Priorität: 27.09.2010 DE 102010037788
(43) Veröffentlichungstag der Anmeldung: 07.08.2013
(73) Patentinhaber: Viprotron GmbH, 64293 Darmstadt (DE)
(72) Erfinder: VOGEL, Kai, 64342 Seeheim-Jugenheim (DE)
(74) Vertreter: Habermann Intellectual Property Partnerschaft von Patentanwälten mbB
(86) Internationale Anmeldenummer: PCT/EP2011/066728
(87) Internationale Veröffentlichungsnummer: WO 2012/041830

(56) Entgegenhaltungen:
- DE-A1- 10 111 409
- DE-B3-102006 014 345
- DE-U1- 20 004 332
- JP-A- 2006 066 344
- US-A- 5 459 330

## Beschreibung

Die Erfindung betrifft Verfahren und Vorrichtungen gemäß den Oberbegriffen der Patentansprüche 1 und 8.

Im Rahmen einer ständig fortschreitenden Automatisierung industrieller Herstellungsverfahren werden zunehmend einzelne Herstellungsprozesse oder Fertigungs- und Bearbeitungsschritte automatisiert durchgeführt. Gleichzeitig wird versucht, auch die Kontrolle der einzelnen Herstellungs- und Fertigungsschritte sowie eine gegebenenfalls erforderliche Endkontrolle des hergestellten Erzeugnisses ebenfalls weitgehend oder vollständig automatisiert durchzuführen. In vielen Bereichen kann dabei durch den Einsatz geeigneter Sensoren und Messgeräte eine aussagekräftige und zuverlässige Qualitätskontrolle gewährleistet werden, die mit einer manuellen Überprüfung und Inspektion vergleichbar oder dieser sogar überlegen ist.

Es sind jedoch auch Herstellungsverfahren oder Erzeugnisse aus der Praxis bekannt, bei denen eine automatisierte Fehlererkennung und Qualitätskontrolle nicht oder nur eingeschränkt möglich ist. In vielen Fällen wird dann eine manuelle Überprüfung und Inspektion der betreffenden Herstellungsschritte oder des Erzeugnisses während oder nach dem Herstellungsverfahren durchgeführt.

Es ist aus der Praxis bekannt, dass zur Unterstützung oder zur Vorbereitung einer manuellen Überprüfung eines Prüflings mit einer Inspektionseinrichtung Fehler und deren Position auf der Oberfläche des Prüflings oder auch innerhalb des Prüflings ermittelt werden, sofern der Prüfling beispielsweise aus Glas oder einem anderen transparenten Material besteht. Die ermittelten Fehlerstellen werden anschließend mittels einer Anzeigeeinrichtung angezeigt. Neben einfachen Anzeigeeinrichtungen, die lediglich das Vorhandensein eines Fehlers beispielsweise durch eine rot aufleuchtende Signaleinrichtung anzeigen können, sind aus der Praxis auch Bildschirmanzeigen bekannt, die eine Abbildung des Prüflings und die Position des mit der Inspektionseinrichtung ermittelten Fehlers auf der Oberfläche des Prüflings schematisch wiedergeben können. Die Lokalisierung des Fehlers auf dem Prüfling wird dadurch erleichtert, so dass die erforderliche manuelle Überprüfung des Fehlers schneller durchgeführt und abgeschlossen werden kann.

Derartige manuelle Überprüfungen und Qualitätskontrollen werden beispielsweise auch bei der Herstellung einzelner Glasscheiben und deren Weiterverarbeitung zu einem Isolierglasprodukt durchgeführt. Eine zuverlässige Unterscheidung zwischen Defekten wie beispielsweise Blasen, Kratzern, Beschichtungs- und Folienfehler einerseits sowie anhaftenden Staub- oder Schmutzpartikeln bzw. entfernbaren Verunreinigungen andererseits ist mit wirtschaftlich sinnvoll einsetzbaren automatischen Inspektionseinrichtungen kaum möglich. Wird eine Fehlerstelle ermittelt, so muss üblicherweise durch eine manuelle Inspektion entschieden werden, ob ein irreparabler Defekt oder lediglich eine Verunreinigung vorliegt, die beseitigt werden kann. Bei großen Oberflächen, wie sie beispielsweise bei großen Fensterscheiben oder Glastüren auftreten, kann die Lokalisierung eines Fehlers auch dann noch mit einem erheblichen Zeitaufwand verbunden sein, wenn auf einem nahe der Glasscheibe angeordneten Monitor schematisch dessen Position auf der Glasscheibe angedeutet wird.

Bei der Fahrzeugherstellung ist es aus der Praxis bekannt, dass mit einer automatischen Inspektionseinrichtung festgestellte Fehler mit einer abwaschbaren Farbmarkierung versehen werden, um im weiteren Verlauf entlang der Produktionslinie den Fehler schnell auffinden und gegebenenfalls beseitigen zu können. Die Farbmarkierungen werden üblicherweise mit Robotern erzeugt, die eine komplexe Ansteuerung erfordern. Im Falle einer baldigen manuellen Überprüfung ist das Anbringen einer Farbmarkierung und deren anschließende rasche Entfernung mit einem oftmals unnötigen Aufwand und hohen Kosten verbunden.

Auch ist aus der Rohglasherstellung bekannt das Farbmarkierungen verwendet werden, um anschließend die farbmarkierten Glasplatten aus dem weiteren Produktionsprozess heraus nehmen zu können. Auch hier ist das Aufbringen der Farbmarkierung kostenaufwendig. Sofern es sich um eine entfernbare Verunreinigung handelt, ist das Entfernen der Markierung sehr aufwendig, um die Glasplatte weiterverwenden zu können.

In den Druckschriften DE 10 2006 014345 B3, DE 101 11 409 A1 und DE 200 04 332 U1 werden Verfahren zur Anzeige von Fehlerstellen auf der Oberfläche nicht transparenter Gegenstände beschrieben. Zu diesem Zweck werden mit Hilfe von Projektionseinrichtungen zuvor erkannte Fehlerstellen der nicht transparenten Gegenstände gezielt beispielsweise mittels Laser angestrahlt, so dass die Fehlerstelle einfach unmittelbar an dem geprüften Gegenstand aufgefunden werden kann.

Die Druckschrift US 5 459 330 A beschreibt ein Verfahren zur Lokalisierung von Fehlerstellen in dicken Glasscheiben, wobei Laserlicht in die Scheibe eingebracht und das durch Fehlerstellen innerhalb der Scheibe reflektierte Licht mittels CCD-Kameras erfasst wird.

In der Druckschrift JP 2006 066344 A wird eine Vorrichtung zur Lokalisierung von Fehlern in Mattscheiben mittels in die Scheiben eingebrachten Lichts unterschiedlicher Farbe beschrieben. Zu diesem Zweck wird Licht über zwei Seitenkanten einer unteren Mattscheibenschicht sowie über eine Seitenkante und eine Frontseite einer oberen Mattscheibenschicht in die Mattscheibe eingeleitet. Durch Fehler in den Mattscheibenschichten wird das Licht gebrochen und abgeleitet. Diese Lichtbrechung kann durch einen Beobachter wahrgenommen und zur Lokalisierung des Fehlers verwendet werden.

Es wird deshalb als eine Aufgabe der vorliegenden Erfindung angesehen, Verfahren und Vorrichtungen zur Anzeige von automatisiert ermittelten Fehlerstellen zu verbessern, so dass ein Auffinden der Fehlerstelle auf der Oberfläche des Prüflings erleichtert wird, um eine rasche und zuverlässige manuelle Überprüfung der Fehlerstelle zu ermöglichen.

Diese Aufgabe wird erfindungsgemäß durch Verfahren und Vorrichtungen gemäß der kennzeichnenden Merkmale der Patentansprüche 1 und 8 gelöst.

Da die mit der Beleuchtungseinrichtung erzeugte Leuchtanzeige die Position des Fehlers unmittelbar auf der Oberfläche oder an den Seitenkanten des Prüflings anzeigt, kann die Fehlerstelle rasch und zuverlässig lokalisiert werden. Beispielsweise kann mit der Beleuchtungseinrichtung eine Lichtmarkierung auf der Oberfläche des Prüflings erzeugt werden, die einen kleinen abgrenzbaren Bereich der Oberfläche des Prüflings erleuchtet, in dem sich der Fehler befindet. Ein mehrfacher Abgleich der Oberfläche des Prüflings mit einer Fehlermarkierung in einer Abbildung auf einem in der Nähe befindlichen Bildschirm, wie es bei Inspektionseinrichtungen aus dem Stand der Technik bekannt ist und insbesondere bei großen Oberflächen des Prüflings für das Auffinden eines oftmals kleinen Fehlers notwendig wurde, ist nicht mehr erforderlich.

Je nach den Gegebenheiten kann die markierende Leuchtanzeige die gewünschte Ortsinformation durch eine gezielte helle Beleuchtung der Position des Fehlers bewirkt werden. Die markierende Leuchtanzeige kann auf der Oberfläche des Prüflings auch einen vorgebbaren Versatz zu der Position des Fehlers aufweisen, falls durch eine direkte Beleuchtung des Fehlers dessen manuelle Überprüfung erschwert würde. Es kann ebenfalls zweckmäßig sein, dass die markierende Leuchtanzeige die Oberfläche des Prüflings vollständig oder zumindest teilweise beleuchtet und lediglich ein kleiner Bereich um die automatisch ermittelte Fehlerstelle abgedunkelt wird.

Gemäß einer Ausgestaltung des Erfindungsgedankens ist vorgesehen, das mehrere Fehlerstellen gleichzeitig, sukzessive oder alternierend mit der markierenden Leuchtanzeige angezeigt werden. Die Leuchtanzeige kann wahlweise manuell oder auch automatisch, bzw. in vorgegebenen Zeitabständen zwischen mehreren Fehlerstellen umgeschaltet werden. Zweckmäßigerweise kann eine manuelle Auswahl des mit der Leuchtanzeige markierten Fehlers jederzeit vorgegeben werden, um eine intensive Überprüfung zu ermöglichen.

Es ist ebenfalls denkbar, dass die Leuchtanzeige mehrere Prüflinge gleichzeitig erfassen und eventuelle Fehlerstellen in allen erfassten Prüflingen gleichzeitig, sukzessive oder alternierend anzeigen kann. Sofern es in Einzelfällen als ausreichend erachtet wird, kann auch lediglich ein fehlerhafter Prüfling markiert und beispielsweise für eine Vereinzelung oder Aussonderung gekennzeichnet werden.

Um den mit der manuellen Überprüfung und Kontrolle durchgeführten Aufwand in einfacher Weise an die in dem jeweiligen Einzelfall vorgegebenen Anforderungen und Qualitätskriterien anpassen zu können ist vorgesehen, dass nach der automatisierten Ermittlung der Fehlerstelle anhand von quantifizierbaren Eigenschaften des Fehlers überprüft wird, ob der Prüfling trotz des Fehlers ein vorgebbares Qualitätskriterium erfüllt, und dass nur bei einer Nichterfüllung des Qualitätskriteriums nachfolgend eine die Position des Fehlers an oder auf dem Prüfling markierende Leuchtanzeige erfolgt.

Die manuelle Überprüfung des Fehlers und eine davon abhängige Entscheidung, wie mit dem fehlerbehafteten Prüfling weiter verfahren werden soll, kann erfindungsgemäß dadurch erleichtert werden, dass eine Ausdehnung und/oder eine Ausrichtung einer nicht radialsymmetrischen markierenden Leuchtanzeige in Abhängigkeit von quantifizierbaren Eigenschaften des Fehlers vorgegeben wird. So kann beispielsweise die automatisiert ermittelte Art oder die Größe des Fehlers über den in Abhängigkeit davon vorgegebenen Durchmesser eines kreisrunden Leuchtflecks angezeigt werden. Es ist ebenfalls denkbar und in der Praxis oftmals hilfreich, wenn ein länglicher Fehler wie beispielsweise ein Kratzer durch eine daran angepasste, beispielsweise strichförmig oder elliptische Leuchtanzeige markiert wird. In vorteilhafter Weise kann die Ausrichtung der nicht radialsymmetrischen Leuchtanzeige mit der Ausrichtung des Fehlers auf der Oberfläche des Prüflings übereinstimmen.

Zweckmäßigerweise ist vorgesehen, dass eine Farbgebung der markierenden Leuchtanzeige in Abhängigkeit von quantifizierbaren Eigenschaften des Fehlers vorgegeben wird. Beispielsweise können Fehler, die als nicht kritisch eingeschätzt werden, durch einen grünen oder blauen Leuchtfleck markiert werden. Ein Fehler, der auf Grund seiner Art oder seiner Größe als kritisch eingestuft wird und beispielsweise dazu führen könnte, dass der Prüfling aussortiert werden sollte, kann rot oder in einer anderen auffallenden und gegebenenfalls warnenden Signalfarbe markiert werden.

Es ist ebenfalls denkbar, dass die markierende Leuchtanzeige blinkt oder über einen vorgebbaren Bereich der Oberfläche des Prüflings wandert.

Sofern weitere Informationen zur Verfügung stehen, die im Rahmen einer manuellen Überprüfung und Kontrolle relevant erscheinen oder berücksichtigt werden sollen, können mit der markierenden Leuchtanzeige alternativ oder zusätzlich weitere Eigenschaften des Prüflings angezeigt werden. Auf diese Weise können beispielsweise Abweichungen in der Materialzusammensetzung oder in der Formgebung des Prüflings angezeigt werden. Es ist ebenfalls denkbar, dass vorgegebene Bereiche markiert werden, für welche unterschiedliche Qualitätskriterien gelten und im Rahmen der manuellen Überprüfung berücksichtigt werden müssen. Weiterhin kann mit der Leuchtanzeige auch angezeigt werden, ob der Prüfling beispielsweise hinsichtlich seiner Größe oder seiner Qualität vorgegebenen Anforderungen entspricht. So können beispielsweise bei einer Verwendung von Lichtleisten zur Markierung eines Fehlers die jeweils über den Prüfling überstehenden Leuchtquellen dazu verwendet werden, die Sollgröße oder über deren Farbe die Qualität des Prüflings anzuzeigen. Die Lichtleisten können auch als Positionierhilfe, bzw. Kontrolle verwendet werden.

Es ist ebenfalls denkbar, dass über die Leuchtanzeige unterschiedliche Qualitätszonen des Prüflings angezeigt werden. So können mit verschiedenen Farben jeweils Bereiche mit unterschiedlichen Qualitätsanforderungen angezeigt werden, um die manuelle Überprüfung und Fehlerkontrolle zusätzlich zu erleichtern.

Um die Unterstützung einer manuellen Überprüfung auch bei sich kontinuierlich bewegenden Prüflingen zu ermöglichen ist vorgesehen, dass die markierende Leuchtanzeige mit einem sich bewegenden Prüfling mitgeführt wird.

Erfindungsgemäß ist vorgesehen, dass die Vorrichtung eine Positioniereinrichtung für den Prüfling und eine Beleuchtungseinrichtung aufweist, mittels der eine die Position des Fehlers auf der Oberfläche oder an mindestens einer angrenzenden Seitenkante des Prüflings markierende Leuchtanzeige erzeugbar ist. Die Beleuchtungseinrichtung weist eine vorgebbare Anordnung bzw. räumliche Beziehung zu der Positioniereinrichtung auf, so dass für eine durch die Positioniereinrichtung vorgegebene Anordnung und Ausrichtung des Prüflings mit der Beleuchtungseinrichtung die Position eines Fehlers auf der Oberfläche des Prüflings zuverlässig und präzise markiert werden kann.

Die Positioniereinrichtung kann beispielsweise einen in einen Transportweg des Prüflings verlagerbaren Anschlag oder eine Aufnahmeeinrichtung für den Prüfling beinhalten, so dass für die Dauer der Fehleranzeige der Prüfling in einer vorgegebene Position positioniert, bzw. fixiert werden kann. Wenn die Fehleranzeige beispielsweise unmittelbar nach dessen Herstellung während eines Transportvorgangs auf einer Transporteinrichtung, gegebenenfalls eine Band- oder Rollenförderanlage, erfolgen soll, kann die Positioniereinrichtung einen Stoppsensor umfassen, der die Transporteinrichtung anhält, sobald der Prüfling eine für die Fehleranzeige vorgegebene Position erreicht hat.

Falls der Prüfling während des Transportvorgangs nicht angehalten werden soll oder der Prüfling nicht mit der erforderlichen Präzision angehalten und positioniert werden kann, kann die Förderanlage in Verbindung mit Positionserfassungssensoren als Positioniereinrichtung dienen. Die jeweilige Position des Prüflings kann beispielsweise über geeignete Detektoren oder ein optisches Kamerasystem erfasst und an die Beleuchtungseinrichtung übermittelt, bzw. von dieser berücksichtigt werden. Über die Positioniereinrichtung wird die aktuelle Position erfasst und für die Fehleranzeige berücksichtigt, die der Bewegung des Prüflings angepasst ist und eine dem Prüfling nachfolgende ortskorrelierte Anzeige des ermittelten Fehlers oder der mehreren Fehler erzeugt.

Nachfolgend werden unter dem Begriff Positioniereinrichtung alle derartigen Vorrichtungen zusammengefasst, mit denen die Position des Prüflings vorgegeben, bzw. erfasst werden kann, um in Verbindung mit der Beleuchtungseinrichtung die Fehleranzeige auf oder an dem Prüfling zu ermöglichen.

Gemäß einer vorteilhaften Ausgestaltung des Erfindungsgedankens ist vorgesehen, dass die Beleuchtungseinrichtung mindestens eine Lichtleiste mit mehreren in einer Reihe angeordneten Leuchtquellen aufweist. Lichtleisten mit einer großen Anzahl von nebeneinander angeordneten LEDs können kostengünstig hergestellt oder vorgefertigt erworben werden. Anhand der Position einer aufleuchtenden Leuchtquelle innerhalb einer Lichtleiste kann rasch ein zugeordneter streifenförmiger Bereich der Oberfläche des Prüflings eingegrenzt und manuell überprüft werden.

Vorzugsweise weist die Beleuchtungseinrichtung zwei im Wesentlichen senkrecht zueinander angeordnete Lichtleisten mit jeweils mehreren in Reihe angeordneten Leuchtquellen auf. Die beiden in einem rechten Winkel zueinander angeordneten Winkel angeordneten Lichtleisten ermöglichen eine erleichterte Lokalisierung einer Fehlerstelle auf einer durch die Lichtleisten begrenzten Rechteckfläche. Die Größe des Bereichs der Oberfläche des Prüflings, die über die in geeigneter Weise angesteuerten und zum Leuchten gebrachten Leuchtquellen in den Lichtleisten markiert oder ausgeleuchtet wird, hängt auch von der Anzahl, beziehungsweise von dem Abstand der Leuchtquellen in der Lichtleiste sowie von dem Abstand der Fehlerstelle auf oder in dem Prüfling relativ zu den Lichtleisten ab. Es hat sich herausgestellt, dass in vielen Fällen mit Lichtleisten, deren in Reihe angeordnete Leuchtquellen einen Abstand von etwa 1 cm aufweisen, das Auffinden einer Fehlerstelle ganz erheblich erleichtert werden kann.

Es ist ebenfalls denkbar, dass insbesondere bei nicht rechteckförmigen Prüflingen die zwei oder mehreren Lichtleisten nicht senkrecht zueinander, sondern beispielsweise in einem Winkel zueinander so angeordnet und ausgerichtet sind, dass der Verlauf der Lichtleisten an die Konturen des Prüflings angepasst ist.

Insbesondere, aber nicht nur bei einer Verwendung von mehreren Leuchtquellen können gleichzeitig auch gegebenenfalls auftretende Fehler in mehreren gleichzeitig nebeneinander transportierten Prüflingen sowie weitere Eigenschaften angezeigt werden.

Einer Ausgestaltung des Erfindungsgedankens zufolge ist vorgesehen, dass die Leuchtquelle eine hinsichtlich ihrer Formgebung und Größe vorgebbare Leuchtmarkierung erzeugen kann. Zu diesem Zweck kann die Leuchtquelle eine steuerbare Fokussiereinrichtung aufweisen, mit der die Ausdehnung und gegebenenfalls auch die Formgebung der Leuchtmarkierung auf der Oberfläche des Prüflings oder auf einem unmittelbar in dessen Nähe angeordneten Leuchtschirm vorgegeben und variiert werden kann. Es ist auch denkbar, dass die Größe und Formgebung der markierenden Leuchtanzeige durch geeignete Blenden vorgegeben wird, die in dem Leuchtkegel der Leuchtquelle angeordnet werden können.

Vorzugsweise ist vorgesehen, dass die Leuchtquelle eine Leuchtmarkierung in unterschiedlichen Farben erzeugen kann. Vorab ermittelte Eigenschaften des Fehlers können durch unterschiedliche Farben der Leuchtmarkierung signalisiert und dadurch in einfacher Weise bei einer anschließenden manuellen Überprüfung berücksichtigt werden.

Nachfolgend werden Ausführungsbeispiele des Erfindungsgedankens näher erläutert, die in der Zeichnung dargestellt sind. Es zeigt:
Figur 1 eine schematische Ansicht einer Vorrichtung zur Anzeige von Fehlerstellen auf einer Oberfläche einer Glasscheibe, wobei die Vorrichtung zwei rechtwinklig angeordnete Lichtleisten mit mehrere in Reihe angeordneten Leuchtquellen aufweist,
Figur 2 eine den Stand der Technik verdeutlichende Vorrichtung, deren Beleuchtungseinrichtung eine aus mehreren getrennt ansteuerbaren Segmenten zusammengesetzte flächige Leuchtquelle aufweist,
Figur 3 eine wiederum anders ausgestaltete und den Stand der Technik verdeutlichende Vorrichtung mit einer im Abstand zu einem nicht transparenten Prüfling angeordneten schwenkbaren Leuchtquelle,
Figur 4 eine schematische Darstellung eines Fehlers einer Glasscheibe, der mit einer kreisförmigen Leuchtanzeige lokalisiert wird.
Figur 5 eine schematische Darstellung eines Fehlers in einer Glasscheibe, der durch eine Leuchtanzeige mit einer anderen Formgebung markiert wird, und
Figur 6 eine schematische Darstellung von zwei unterschiedlichen Fehlern in einer Glasscheibe, die von zwei Leuchtanzeigen von unterschiedlicher Größe und Formgebung markiert werden.

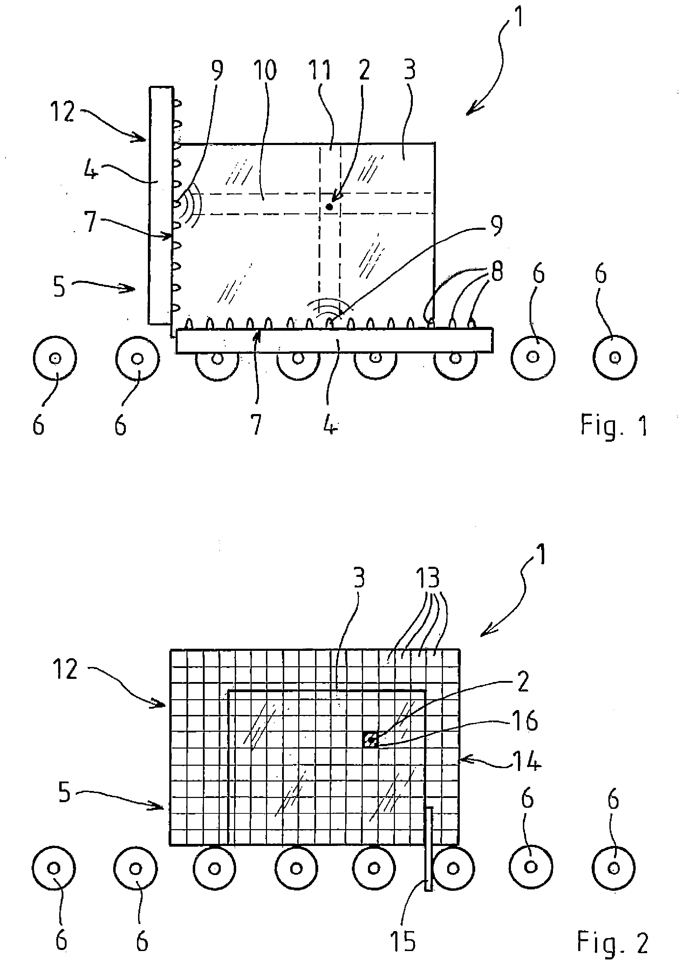

Figur 1 zeigt exemplarisch und lediglich schematisch eine Vorrichtung 1 zur Anzeige von automatisiert ermittelten Fehlern 2 in einer Glasscheibe 3. Die Glasscheibe 3 ist bei diesem Ausführungsbeispiel der Prüfling, der vorab einer automatisierten Ermittlung von Fehlerstellen unterzogen wurde.

Zwei Lichtleisten 4 sind längs einer Fertigungslinie 5, die lediglich schematisch durch mehrere hintereinander angeordnete Transportwalzen 6 angedeutet wird, rechtwinklig zueinander so angeordnet, dass die Glasscheibe 3 während ihres Transports längs der Fertigungslinie 5 mit ihren Seitenkanten 7 fluchtend zu den Lichtleisten 4 angeordnet, beziehungsweise positioniert werden kann. Die Lichtleisten 4 können auch einen kleinen seitlichen oder senkrechten Versatz gegenüber der Glasscheibe 3 aufweisen, sofern dies beispielsweise für den Transport der Glasscheibe 3 in der Fertigungslinie 5 oder für eine einfache Integration in die Fertigungslinie 5 zweckmäßig erscheint. Der Versatz sollte jedoch nicht übermäßig groß sein, so dass eine rasche Zuordnung der über die Lichtleisten 4 erzeugten Leuchtmarkierung zu einer Fehlerstelle auf oder in der Glasscheibe 3 nicht erschwert wird.

Die Lichtleisten 4 weisen jeweils mehrere in Reihe angeordnete Leuchtquellen 8 auf. Bei den Leuchtquellen 8 handelt es sich um farbige LEDs, die mittels einer geeigneten Steuereinrichtung individuell angesteuert werden können. Sofern über die Position des Fehlers 2 hinaus keine weiteren Informationen durch verschiedene Farben der LEDs signalisiert werden sollen, können auch monochrome LEDs verwendet werden.

Um die Lokalisierung des Fehlers 2 in der Glasscheibe 3 vor einer manuellen Überprüfung und Kontrolle zu erleichtern, leuchten diejenigen LEDs 9 auf, die in horizontaler Richtung sowie in vertikaler Richtung jeweils den geringsten Abstand zu dem Fehler aufweisen. Der Fehler 2 befindet sich dann in einem Überlappungsbereich der durch die beiden aufleuchtenden LEDs 9 vorgegebenen zeilenförmigen, beziehungsweise spaltenförmigen Bereiche 10, 11. Die Lichtleisten 4 mit den Leuchtquellen 8, 9 bilden eine Beleuchtungseinrichtung 12, mit der die Position des Fehlers 2 an den Seitenkanten 7 der Glasscheibe 3 angezeigt werden können.

Bei dem in Figur 2 ebenfalls schematisch abgebildeten und den Stand der Technik verdeutlichenden Ausführungsbeispiel weist die Vorrichtung 1 eine abweichend ausgestaltete Beleuchtungseinrichtung 12 auf, die eine aus mehreren getrennt ansteuerbaren rechteckförmigen Segmenten 13 zusammengesetzte flächige Leuchtquelle 14 aufweist. Die einzelnen Segmente 13 können individuell zum Leuchten gebracht werden. Wenn die Glasscheibe 3 unmittelbar vor der flächigen Leuchtquelle 14 angeordnet wird, kann über ein Aufleuchten eines Segments 16 oder mehrerer Segmente 16 im Hintergrund der Glasscheibe 3 ein rasches Auffinden eines Fehlers 2, bzw. mehrerer Fehler 2 in dem entsprechenden Bereich der davor befindlichen Glasscheibe 3 unterstützt werden.

Längs der Fertigungslinie 5 ist eine Positioniereinrichtung 15 mit einem verlagerbaren Anschlag vorgesehen, der in den Transportweg der Glasscheibe 3 verlagert werden kann und die Glasscheibe 3 in einer vorgebbaren Ausrichtung relativ zu der dahinter angeordneten flächigen Leuchtquelle 14 positioniert. Durch das gezielte Aufleuchten desjenigen Segments 16, in dessen zugeordneten Bereich in der Glasscheibe 3 sich der Fehler 2 befindet, kann eine Lokalisierung des Fehlers 2 auf der Glasscheibe 3 erheblich erleichtert werden. In Abhängigkeit von dem Ergebnis einer manuellen Überprüfung und Kontrolle des Fehlers 2 der Glasscheibe 3 kann der Anschlag der Positioniereinrichtung 15 aus dem Transportweg der Glasscheibe 3 heraus verlagert und die Glasscheibe 3 längs der Fertigungslinie 5 weiter transportiert werden, oder aber die Glasscheibe 3 aus dem Fertigungsprozess herausgenommen werden.

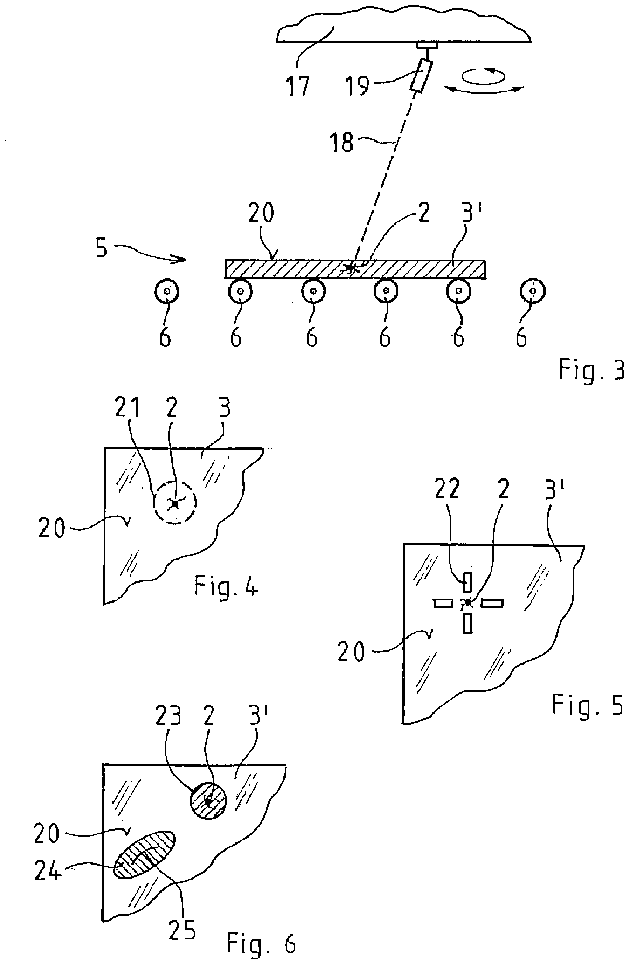

Bei dem in Figur 3 schematisch dargestellten und den Stand der Technik darstellenden Ausführungsbeispiel wird ein plattenförmiger Prüfling 3' aus einem nicht transparenten Material nicht hochkant, sondern flach liegend auf den Transportwalzen 6 längs der Fertigungslinie 5 transportiert. An einer darüber befindlichen Decke 17 ist eine einen Lichtstrahl 18 emittierende Leuchtquelle 19 beweglich gelagert. Die Leuchtquelle 19 kann mittels einer nicht dargestellten Steuereinrichtung beliebig verkippt und verschwenkt werden, so dass die mit dem Lichtstrahl 18 auf eine Oberfläche 20 des Prüflings 3' erzeugte Leuchtmarkierung beliebig auf der Oberfläche 20 positioniert werden kann. Die Leuchtquelle 19 kann in geeigneter Weise angesteuert werden, um auch einem langsam auf den Transportwalzen 6 unter der Leuchtquelle 19 vorbei bewegten Prüfling 3' folgen zu können, so dass die auf der Oberfläche 20 des Prüflings 3' erzeugte Leuchtmarkierung in Abhängigkeit von dem an der Leuchtquelle 19 vorbei wandernden Fehler 2 nachgeführt wird.

In den Figuren 4 bis 6 sind exemplarisch verschiedene Leuchtmarkierungen 21, 22, 23 und 24 abgebildet. Bei dem in Figur 4 dargestellten Ausführungsbeispiel wird der Fehler 2 auf der Oberfläche 20 des Prüflings 3' durch eine kreisförmige Leuchtmarkierung 21 lokalisiert. Bei dem in Figur 5 dargestellten Ausführungsbeispiel weist die Leuchtmarkierung 22 die Formgebung eines Fadenkreuzes auf, in dessen Mittelpunkt sich der Fehler 2 auf der Oberfläche 20 des Prüflings 3' befindet. Bei dem in Figur 6 exemplarisch abgebildeten Ausführungsbeispiel wird ein punktförmiger Fehler 2 durch eine kreisförmige Leuchtmarkierung 23 in blauer Farbe markiert, während ein ausgedehnter Kratzer 25 durch eine näherungsweise elliptische Leuchtmarkierung 24 mit grüner Farbgebung lokalisiert wird. Die Ausrichtung der Leuchtmarkierung 24 entspricht dabei näherungsweise dem Verlauf des Kratzers 25, wodurch dessen Lokalisierung zusätzlich erleichtert wird.

## Patentansprüche

1. Verfahren zur Anzeige von automatisiert ermittelten Fehlerstellen auf oder in einem transparenten Prüfling, wobei eine mit einer Inspektionseinrichtung ermittelte Position der Fehlerstelle eines Fehlers auf oder in dem transparenten Prüfling nachfolgend angezeigt wird, wobei mit einer Beleuchtungseinrichtung (12) eine die Position der ermittelten Fehlerstelle des Fehlers (2) markierende Leuchtanzeige (21, 22, 23 und 24) im Bereich von mindestens einer zur Oberfläche des Prüflings angrenzenden Seitenkante (7) des transparenten Prüflings (3,3') erzeugt wird.

2. Verfahren nach Anspruch 1, **dadurch gekennzeichnet, dass** nach der automatisierten Ermittlung der Fehlerstelle anhand quantifizierbarer Eigenschaften des Fehlers (2) überprüft wird, ob der Prüfling (3, 3') trotz des Fehlers (2) ein vorgebbares Qualitätskriterium erfüllt, und dass nur bei einer Nichterfüllung des Qualitätskriteriums nachfolgend eine die Position des Fehlers (2) an oder auf dem Prüfling (3, 3') markierende Leuchtanzeige (21, 22, 23 und 24) erfolgt.

3. Verfahren nach einem der vorangehenden Ansprüche, **dadurch gekennzeichnet, dass** mehrere Fehler (2) gleichzeitig, sukzessive oder alternierend mit der markierenden Leuchtanzeige (21, 22, 23 und 24) angezeigt werden.

4. Verfahren nach einem der vorangehenden Ansprüche, **dadurch gekennzeichnet, dass** eine Ausdehnung und/oder eine Ausrichtung einer nicht radialsymmetrischen markierenden Leuchtanzeige (21, 22, 23 und 24) und/oder eine Farbgebung der markierenden Leuchtanzeige (21, 22, 23 und 24) in Abhängigkeit von quantifizierbaren Eigenschaften des Fehlers (2) vorgegeben wird.

5. Verfahren nach einem der vorangehenden Ansprüche, **dadurch gekennzeichnet, dass** mit der markierenden Leuchtanzeige (21, 22, 23 und 24) alternativ oder zusätzlich weitere Eigenschaften des Prüflings (3, 3') angezeigt werden.

6. Verfahren nach einem der vorangehenden Ansprüche, **dadurch gekennzeichnet, dass** die markierende Leuchtanzeige (21, 22, 23 und 24) mit einem sich bewegenden Prüfling (3, 3') mitgeführt wird.

7. Verfahren nach einem der vorangehenden Ansprüche, **dadurch gekennzeichnet, dass** mit einer markierenden Leuchtanzeige (21, 22, 23 und 24) gegebenenfalls auftretende Fehler (2) in mehreren gleichzeitig nebeneinander transportierten Prüflingen (3, 3') angezeigt werden.

8. Vorrichtung zur Anzeige von automatisiert ermittelten Fehlerstellen auf einer Oberfläche eines Prüflings (3, 3') aus einem transparenten Material, wobei eine mit einer Inspektionseinrichtung ermittelte Position eines Fehlers auf oder in dem transparentem Prüfling (3, 3') angezeigt wird, wobei die Vorrichtung (1) eine Positioniereinrichtung (15) für den Prüfling (3, 3') und eine Beleuchtungseinrichtung (12) aufweist, wobei mittels der Beleuchtungseinrichtung (12) eine die Position der ermittelten Fehlerstelle des Fehlers (2) mittels der Beleuchtungseinrichtung an mindestens einer zur Oberfläche des Prüflings angrenzenden Seitenkante (7) des Prüflings (3, 3') markierende Leuchtanzeige (21, 22, 23 und 24) erzeugt ist, wobei die Beleuchtungseinrichtung (12) mindestens eine Lichtleiste (4) mit mehreren in einer Reihe angeordneten Leuchtquellen (8) aufweist.

9. Vorrichtung nach Anspruch 8, **dadurch gekennzeichnet, dass** die Beleuchtungseinrichtung (12) zwei im Wesentlichen senkrecht zueinander angeordnete oder in einem Winkel zueinander angeordnete Lichtleisten (4) mit jeweils mehreren in Reihe angeordneten Leuchtquellen (8) aufweist.

10. Vorrichtung nach Anspruch 8 oder Anspruch 9, **dadurch gekennzeichnet, dass** die Leuchtquelle (8, 14, 19) eine hinsichtlich ihrer Formgebung und Größe vorgebbare Leuchtmarkierung (21, 22, 23 und 24) erzeugen kann.

11. Vorrichtung nach einem der Ansprüche 8 bis 10, **dadurch gekennzeichnet, dass** die Leuchtquelle (8, 14, 19) eine Leuchtmarkierung (21, 22, 23 und 24) in unterschiedlichen Farben erzeugen kann.

## Claims

1. Method for indicating automatically identified flaw locations on or in a transparent test specimen, wherein a position of the flaw location of a flaw identified by an inspection device on or in the transparent test specimen is subsequently indicated, wherein an illuminated mark (21, 22, 23 and 24) marking the position of the identified flaw location of the flaw (2) is produced by an illumination device (12) in the area of at least one lateral edge (7) of the transparent test specimen (3, 3') adjacent to the surface of the test specimen.

2. Method according to claim 1, **characterised in that** following the automatic identification of the flaw location by means of quantifiable attributes of the flaw (2), it is examined whether the test specimen (3, 3') satisfies a specifiable quality criterion in spite of the flaw (2), and that only in the event of the quality criterion not being satisfied, an illuminated mark (21, 22, 23 and 24) marking the position of the flaw (2) at or on the test specimen (3, 3') subsequently is produced.

3. Method according to one of the preceding claims, **characterised in that** several flaws (2) are indicated simultaneously, successively or in an alternating manner by the marking illuminated mark (21, 22, 23 and 24).

4. Method according to any one of the preceding claims, **characterised in that** an extension and/or an orientation of a marking illuminated mark (21, 22, 23 and 24) that is not radially symmetrical and/or a colouring of the marking illuminated mark (21, 22, 23 and 24) is defined dependent upon quantifiable attributes of the flaw (2).

5. Method according to any one of the preceding claims, **characterised in that** other attributes of the test specimen (3, 3') are indicated alternatively or additionally by the marking illuminated mark (21, 22, 23 and 24).

6. Method according to any one of the preceding claims, **characterised in that** the marking illuminated mark (21, 22, 23 and 24) is moved along with a moving test specimen (3, 3').

7. Method according to any one of the preceding claims, **characterised in that** any flaws (2) occurring in multiple test specimens (3, 3') transported simultaneously adjacent to one another are indicated by a marking illuminated mark (21, 22, 23 and 24).

8. Apparatus for indicating automatically identified flaw locations on a surface of a test specimen (3, 3') of a transparent material, wherein a position of a flaw identified by an inspection device on or in the transparent test specimen (3, 3') is indicated, wherein the apparatus (1) comprises a positioning device (15) for the test specimen (3, 3') and an illumination device (12), wherein by means of the illumination device (12) an illuminated mark (21, 22, 23 and 24) marking the position of the identified flaw location of the flaw (2) is produced by means of the illumination device (12) on at least one lateral edge (7) of the test specimen (3, 3') adjacent to the surface of the test specimen, wherein the illumination device (12) comprises at least one light strip (4) with multiple lighting sources (8) arranged in a row.

9. Apparatus according to claim 8, **characterised in that** the illumination device (12) comprises two light strips (4) arranged substantially perpendicular to one another or arranged at an angle to one another, each with multiple lighting sources (8) arranged in a row.

10. Apparatus according to claim 8 or claim 9, **characterised in that** the lighting source (8, 14, 19) can produce an illuminated marking (21, 22, 23 and 24) that is specifiable in respect of its shape and size.

11. Apparatus according to any one of claims 8 to 10, **characterised in that** the lighting source (8, 14, 19) can produce an illuminated marking (21, 22, 23 and 24) in different colours.

## Revendications

1. Procédé d'indication d'emplacements défectueux déterminés automatiquement sur ou dans un spécimen transparent, une position de l'emplacement défectueux d'un défaut sur ou dans le spécimen transparent déterminée au moyen d'un appareil d'inspection étant ensuite indiquée, une indication lumineuse (21, 22, 23 et 24) de marquage de la position de l'emplacement défectueux du défaut (2) déterminé étant générée au moyen d'un appareil d'éclairage (12) dans la zone d'au moins une arête latérale (7) du spécimen transparent (3, 3') adjacente à la surface du spécimen.

2. Procédé selon la revendication 1, **caractérisé en ce que**, après la détermination automatique de l'emplacement défectueux, il est vérifié sur la base de propriétés quantifiables du défaut (2) si le spécimen (3, 3') répond à un critère de qualité prédéfinissable malgré le défaut (2), et **en ce que**, seulement en cas de non-satisfaction du critère de qualité, une indication lumineuse (21, 22, 23 et 24) de marquage de la position du défaut (2) dans ou sur le spécimen (3, 3') est ensuite réalisée.

3. Procédé selon l'une des revendications précédentes, **caractérisé en ce que** plusieurs défauts (2) sont indiqués simultanément, successivement ou en alternance avec l'indication lumineuse (21, 22, 23 et 24) de marquage.

4. Procédé selon l'une des revendications précédentes, **caractérisé en ce qu'**une extension et/ou une orientation d'une indication lumineuse (21, 22, 23 et 24) de marquage non radialement symétrique et/ou une coloration de l'indication lumineuse (21, 22, 23 et 24) de marquage est prédéfinie en fonction de propriétés quantifiables du défaut (2).

5. Procédé selon l'une des revendications précédentes, **caractérisé en ce que**, avec l'indication lumineuse (21, 22, 23 et 24) de marquage, d'autres propriétés du spécimen (3, 3') sont indiquées de manière alternative ou supplémentaire.

6. Procédé selon l'une des revendications précédentes, **caractérisé en ce que** l'indication lumineuse (21, 22, 23 et 24) de marquage est transportée avec un spécimen (3, 3') se déplaçant.

7. Procédé selon l'une des revendications précédentes, **caractérisé en ce que** des défauts (2) apparaissant éventuellement dans plusieurs spécimens (3, 3') transportés simultanément les uns à côté des autres sont indiqués avec une indication lumineuse (21, 22, 23 et 24) de marquage.

8. Dispositif d'indication d'emplacements défectueux déterminés automatiquement sur une surface d'un spécimen (3, 3') en matériau transparent, une position d'un défaut sur ou dans le spécimen (3, 3') transparent déterminée au moyen d'un appareil d'inspection étant indiquée, le dispositif (1) comportant un appareil de positionnement (15) pour le spécimen (3, 3') et un appareil d'éclairage (12), une indication lumineuse (21, 22, 23 et 24) de marquage de la position de l'emplacement défectueux déterminé du défaut (2) étant générée au moyen de l'appareil d'éclairage sur au moins une arête latérale (7) du spécimen (3, 3') adjacente à la surface du spécimen, l'appareil d'éclairage (12) comportant au moins une barre lumineuse (4) avec plusieurs sources de lumière (8) disposées en une rangée.

9. Dispositif selon la revendication 8, **caractérisé en ce que** l'appareil d'éclairage (12) comporte deux barres lumineuses (4) disposées sensiblement perpendiculairement l'une par rapport à l'autre ou disposées selon un angle l'une par rapport à l'autre, et comprenant respectivement plusieurs sources de lumière (8) disposées en une rangée.

10. Dispositif selon la revendication 8 ou la revendication 9, **caractérisé en ce que** la source de lumière (8, 14, 19) peut générer un marquage lumineux (21, 22, 23 et 24) prédéfinissable en ce qui concerne sa forme et sa taille.

11. Dispositif selon l'une des revendications 8 à 10, **caractérisé en ce que** la source de lumière (8, 14, 19) peut générer un marquage lumineux (21, 22, 23 et 24) dans différentes couleurs.
